# EUROPEAN PATENT SPECIFICATION

(11) **EP 4 119 291 B1**
(45) Date of publication and mention of the grant of the patent: **27.03.2024**
(21) Application number: 22182748.8
(22) Date of filing: 04.07.2022
(51) Int. Cl.: B23Q 23/00

(54) **MACHINE FOR PROCESSING WORKPIECES COMPRISING A DETECTION SYSTEM AND CORRESPONDING OPERATION METHOD**
WERKSTÜCKVERARBEITENDE MASCHINE MIT EINEM DETEKTIERSYSTEM UND ENTSPRECHENDES BETRIEBSVERFAHREN
MACHINE POUR TRAITER DES PIÈCES COMPRENANT UN SYSTÈME DE DÉTECTION ET METHODE OPERATIONNELLE CORRESPONDANTE

(30) Priority: 15.07.2021 IT 202100018767
(43) Date of publication of application: 18.01.2023
(73) Proprietor: SCM Group S.p.A., 47921 Rimini (RN) (IT)
(72) Inventor: FERRI, Mirko, 47921 Rimini (IT)
(74) Representative: Tiburzi, Andrea

(56) References cited:
- WO-A1-2011/099599
- JP-A- H11 142 139

## Description

The present invention relates to a machine for processing workpieces comprising a detection system.

The present invention also relates to the operating method of said machine.

More specifically, the invention relates to a machine for machining workpieces, designed and manufactured in particular for machining wood, plastic, ceramic, glass, fiberglass or metal parts, comprising a detection system for the inclination of the base, but which can be used for any type of detection relating to the inclination of machine components.

In the following, the description will be directed to the inclination of the base, but it is clear that it should not be considered limited to this specific use.

As is well known, there are currently machines for machining wooden pieces capable of performing the machining with a high degree of precision and accuracy, which therefore require to be in optimal working conditions.

WO 2011/099599 A1 discloses a known prior art.

In particular, it is known that machines frequently need to be leveled, that is, adjusted to check and ensure the flatness and horizontality of the support base.

To date, the leveling of these machines requires the use of a level, which must be used by an operator.

If the machine is not leveled, or the inclination level is outside an acceptable inclination interval, appropriate steps must be taken to level it.

In particular, given the large size of the machine base, it is necessary to check the leveling in several positions.

In fact, over time, it can happen that the leveling of the base differs from the initial leveling only in some points, in which case, it is necessary to act on these points to restore the initial leveling.

It is evident that this procedure is expensive in terms of time taken, given the plurality of positions in which it is necessary to check the leveling.

Another obvious disadvantage is that it is necessary to have a suitable tool, such as a manual level or the like, to perform the leveling check.

Furthermore, the leveling operations are conditioned by the level itself, the incorrect positioning of which by an operator can affect its measurement.

The leveling of the machine is currently foreseen at the time of installation of the machine itself and periodic intervals.

It is also evident that this can involve a considerable waste of time or even the operation of the machine in non-optimal conditions for a protracted period.

In fact, it is possible that, after checking the leveling, the inclination of the machine proves to be within the optimal inclination interval, and therefore no leveling operations are necessary.

Alternatively, it may also happen that the machine inclination is out of the optimal inclination interval for an extended period before leveling is checked, compromising the precision and accuracy of the work performed.

In light of the above, the object of the present invention is to provide a machine of the above type, the leveling of which can be checked in a simple way.

A further object of the present invention is to provide a machine whose leveling can be measured regardless of which tools the operator has at his disposal.

Another object of the invention is to provide a system for detecting the leveling of said machine capable of comparing the inclination of the machine itself with a reference inclination interval.

Another object of the present invention is to provide a method for detecting the leveling of the machine base.

It is, therefore, specific object of the present invention a machine for processing workpieces made of wood, glass, fiberglass, plastic, metal, ceramic, and the like, comprising a base, which develops along a first horizontal axis, for resting said machine on a resting surface, said machine being characterized in that it comprises a detection system, capable of detecting the value of the inclination of said base, with respect to a horizontal plane, defined by said first horizontal axis and a second axis orthogonal to said first horizontal axis.

Further according to the invention, said machine comprises a plurality of supporting elements placed between said base and said resting surface; and said detection system may comprise at least one detection device placed between at least two supporting elements consecutive to each other.

Still according to the invention, said machine may comprise a first plurality of supporting elements placed between said base and said resting surface, aligned with a first direction, parallel to said first horizontal axis, and may comprise a second plurality of supporting elements, placed between said base and said resting surface, aligned with a second direction, parallel to said first horizontal axis, said detection system may comprise at least one detection device placed between at least one first and one second supporting element of said first plurality, consecutive with each other, and said detection system may comprise at least one detection device placed between at least one supporting element of said first plurality of supporting elements, and the corresponding supporting element of said second plurality of supporting elements, facing said at least one support element of said first plurality of supporting elements.

Always according to the invention, said machine may comprise a logic control unit, wherein at least one interval of inclination values of said base is stored, and connected to said detection system; said logic control unit may be capable of receiving the inclination value of said base detected by said detection system and comparing it with said at least one stored interval of inclination values; said logic control unit may be capable of emitting a first signal, if the inclination value falls within said at least one stored interval of inclination values.

Further according to the invention, said machine may comprise a logic control unit, wherein at least one interval of inclination values of said base is stored, and connected to said detection system; said logic control unit may be capable of receiving the inclination value of said base detected by said detection system and comparing it with said at least one stored interval of inclination values; and said logic control unit may be capable of emitting a second signal, if the inclination value falls out of said at least one stored interval of inclination values.

Still according to the invention, said machine may comprise at least one interface device, connected to said logic control unit, capable of receiving said first or second signal from said logic control unit and of emitting, respectively, a first and a second signal of the visual and/or acoustic and/or tactile kind.

Always according to the invention, said interface device is a computer integrated in said machine, a portable panel for controlling said machine, a tablet, a smartphone or a wearable device.

Further according to the invention, said interface device is a light device placed along said base.

Still according to the invention, said plurality of supporting elements comprises actuators and/or motors, capable of changing the height of said plurality of supporting elements based on said detected inclination value of said base.

Always according to the invention, said detection system comprises analog, digital or MEMS - *Micro-Electro-Mechanical Systems -* inclinometers, detecting the rotation with respect to one or more axes, like capacitive sensors and/or accelerometers and/or gyroscopes and/or digital levels and/or tiltmeters.

It is further object of the present invention an operation method of a machine (M) comprising the following steps:
*a*. detecting the inclination value of said base between at least two elements of said plurality of supporting elements, with respect to a horizontal plane;
*b*. sending the inclination value of said base detected in said step *a*. to said logic control unit;
*c*. comparing the inclination value of said base sent in said step *b*. with said at least one stored interval of inclination values;
*d*. emitting and sending to said interface device a first signal, if the inclination value falls within said at least one stored interval of inclination values, or a second signal, if the inclination value falls out of said at least one stored interval of inclination values;
*e*. emitting a first visual, acoustic or tactile signal, corresponding to said first signal received in said step *d*., or emitting a visual, acoustic or tactile signal, corresponding to said second signal, received in said step *d*.

Further according to the invention, said step a. is repeated at predetermined periodic intervals.

Still according to the invention, said step a. is constantly executed during the operation of said machine.

The present invention will be now described, for illustrative but not limitative purposes, according to its preferred embodiments, with particular reference to the figures of the enclosed drawings, wherein:
figure 1 shows an axonometric view of a machine for processing workpieces, object of the present invention;
figure 2 shows a front view of a further machine for machining workpieces, object of the present invention; and
figure 3 shows a schematic bottom view of the base of the machine shown in figure 1.

In the various figures, the similar parts will be indicated with the same numerical references.

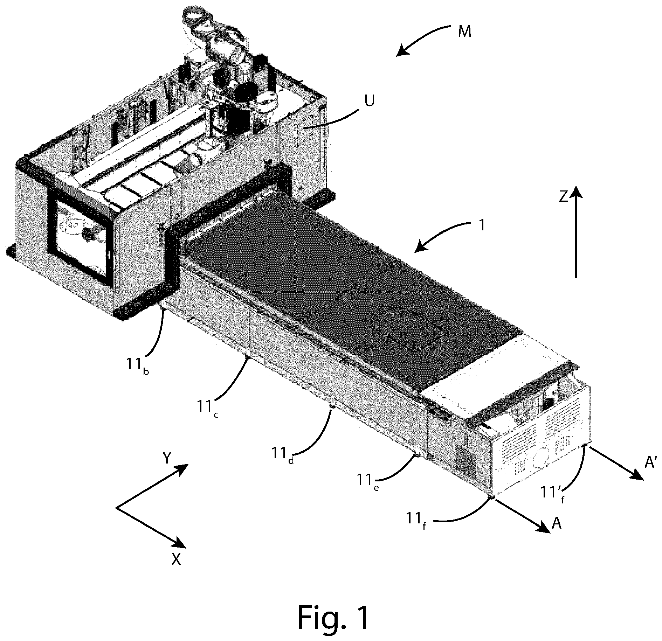

With reference to figures 1 - 3, the machine M for machining pieces, object of the present invention, comprises a base 1, which extends along a first horizontal axis X and is arranged on a support surface, such as the ground, capable of supporting the machine M itself and one or more workpieces to be machined.

The M machine can perform different machining on the workpieces.

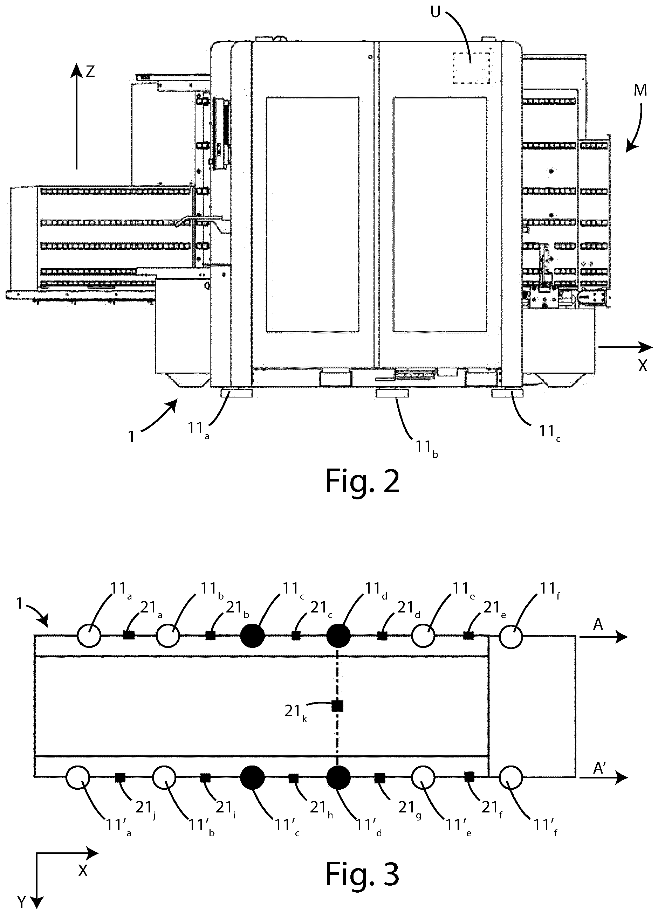

Figure 1 shows a machining center type machine M, while figure 2 shows a drilling type machine M.

In particular, said machine M can be a machining center, in which the workpiece to be machined is blocked on the support surface and the machining unit comprises a crosspiece movable along said first horizontal axis X and a machining head coupled to this, movable along a second Y axis and a third Z axis, or also along 3, 4, 5 or 6 axes, both linear and rotary.

Said machine M can also be a cutting machine, in which, in a known way, the workpiece is held still by a pressure beam on a work surface, and the cut is carried out by a cutting unit that translates along a cutting line.

Furthermore, said machine M can be a pass-through machine, i.e., a machine in which the workpiece to be machined moves along a direction and the machining unit is movable on a plurality of axes, such as for example a sanding machine, an edge banding machine, a molder, a painting machine, a pressing machine or a square-edge-bander.

Without departing from the scope of protection, said machine M can also consist of a carpentry machine, such as for example a circular saw or a spindle molder.

Referring now to figure 1, said base 1 comprises, in turn, a first plurality of support elements 11_{a, b, ..., k, ..., n}, arranged along the lower perimeter of said base 1, according to a first direction A, parallel to said first horizontal axis X, and capable of supporting said base 1.

Said base 1 further comprises a second plurality of support elements 11 '_{a, b, ..., k, ..., n}, arranged along the lower perimeter of said base 1, according to a second direction A', parallel to said first horizontal axis X, and capable of supporting said base 1.

Said first 11ₐ, _{b, ..., k, ..., n} and second 11'_{a, b, ..., k,..., n} plurality of support elements are arranged between said base 1 and said support surface, such as the ground.

Each element of said first 11ₐ, _{b, ..., k, ..., n} and second 11'_{a, b, ..., k, ..., n} plurality of support elements has a height that develops along a vertical direction Z, which it is adjusted to vary the distance between the portion of said base 1 overlying it, and the ground.

The adjustment of said first 11ₐ, _{b, ..., k, ..., n} and second 11 '_{a, b, ..., k, ..., n} plurality of support elements can be done manually, by an operator, or automatically, by means of actuators or motors inserted in the support elements themselves.

In fact, since said base 1 has large dimensions, it is possible that the variations in the distance between the base 1 itself and the ground are not uniform along the entire perimeter of the base 1.

Said machine M comprises a logic control unit U, which the machining programs are stored in.

Furthermore, the predetermined reference inclination intervals of said base 1 are stored in said logic control unit U.

Said predetermined reference inclination intervals are those which allow the machine M to perform accurate and precise machining.

On the other hand, when the leveling of the base 1 deviates from these intervals, the machining of the pieces can be imprecise.

Referring now to figure 3, said machine M comprises a detection system 2, coupled to said base 1, and capable of detecting the inclination of said base 1 with respect to a horizontal plane XY, and sending signals and data to said logic unit control U.

In particular, said detection system 2 comprises one or more detection devices 21_{a, b, ..., k, ..., n,} each arranged between at least two consecutive elements of said first 11ₐ, _{b, , k,..., N} and second 11'_{a, b,.., k,.., n} plurality of supporting elements plurality.

Each device of said one or more detection devices 21_{a, b, ..., k, .., n}, is capable of detecting the inclination of the base portion 1 comprised between two consecutive elements of said first plurality of support elements 11ₐ, _{b, ..., k, ..., n} and/or between two consecutive elements of said second plurality of support elements 11'_{a, b, ..., k, ..., n}, and to send the detected data to said logical control unit U.

Said one or more detection devices 21_{a, b, ..., k, .., n} can be, for example, MEMS technology inclinometers - *Micro-Electro-Mechanical Systems* - with rotation detection with respect to one, two, or three measurement axes, for example capacitive and/or accelerometric and/or gyroscopic sensors.

Without departing from the scope of protection of the present invention, said one or more detection devices 21_{a, b, ..., k, ..., n} can also be, for example, analog or digital inclinometers, such as digital levels, and/or tilt sensor, which is a tube, inside which a metal ball slides following the inclination of the tube, until it reaches one end of the tube itself, causing the circuit to close; by tilting the tube on the opposite side, the ball moves to the opposite end and opens the circuit.

Said machine M is also provided with at least one interface device, not shown in the figure, capable of communicating with said logic control unit U.

Said at least one interface device, is also capable of emitting visual, acoustic, or tactile signals, which can be perceived by an operator.

The operation of the machine M for machining workpieces comprising a detection system described above is as follows.

When said machine M is operating, each device of said one or more detection devices 21_{a, b, ..., k, ..., n} detects the inclination of the base 1 portion comprised between two consecutive elements of said first 11_{a, b,.., k,.., n} and second 11'_{a, b,.., k,.., n} plurality of supporting elements.

Said detection system 2 sends to said logic control unit U the inclination detected by said one or more detection devices 21_{a, b,.., k,.., n}.

Said logic control unit U compares the inclination detected by said detection system 2 with predetermined reference inclination intervals of said base 1.

If the detected inclination is within said predetermined reference inclination interval of said base 1, said logic control unit U transmits a first signal S to said at least one interface device.

Said at least one interface device then emits a first visual, acoustic or tactile signal, to indicate to an operator that said machine M is in optimal working conditions.

If, on the other hand, the detected inclination is outside said predetermined reference inclination interval of said base 1, said logic control unit U transmits a second signal S' to said at least one interface device.

Said at least one interface device then emits a second visual, acoustic or tactile signal, for indicating to an operator that said machine M is not in optimal working conditions, and that a leveling intervention is necessary.

Said at least one interface device can be, for example, a PC integrated in the machine M, a portable control panel of the machine M, a *tablet*, a *smartphone,* or a device that can be worn by an operator, such as for example a bracelet or a necklace.

For example, if the signal is visual, displaying a green light on said interface is possible, in correspondence with said first signal S, while displaying a red light on said interface is possible, in correspondence with said second signal S'.

Without departing from the scope of protection of the present invention, said interface device can also be a luminous device arranged along said base 1, such as for example a strip of LEDs, which, by illuminating with different colors, or partially illuminating, is capable of emitting the first signal S and/or the second signal S'.

Said LED strip can therefore change color, or progressively light up, when the inclination value detected by the corresponding detection device 21ₖ is, or is not, within the interval of stored inclination values.

It is also possible to set said detection system 2, so that it periodically checks the leveling of the base 1, and sends corresponding signals to said logic control unit U, to inform the operators about the leveling status of the base 1.

A first advantage of the present invention is the possibility of having a machine M, the leveling of which is easy to check.

A further advantage of the present invention is the possibility of detecting said leveling independently of the tools available to the operator.

Another advantage of the invention is the possibility of having a system for detecting the leveling of said machine M capable of comparing the inclination of the machine M itself with a reference inclination interval.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Machine (M) for processing workpieces made of wood, glass, fiberglass, plastic, metal, ceramic comprising a base (1), which develops along a first horizontal axis (X), for resting said machine (M) on a resting surface,
said machine (M) being **characterized in that** it comprises a detection system (2), capable of detecting the value of the inclination of said base (1), with respect to a horizontal plane (XY), defined by said first horizontal axis (X) and a second axis (Y) orthogonal to said first horizontal axis (X).

2. Machine (M) according to the previous claim, **characterized**
**in that** it comprises a plurality of supporting elements (11_{a,b,...,k,...,n}; 11'_{a,b,...,k,...,n}) placed between said base (1) and said resting surface; and
**in that** said detection system (2) comprises at least one detection device (21ₖ) placed between at least two supporting elements (11_{a,b,..,k,..,n}; 11'_{a,b,...,k,...,n}) consecutive to each other.

3. Machine (M) according to any one of the previous claims, **characterized**
**in that** it comprises a first plurality of supporting elements (11_{a,b,...,k,...,n}) placed between said base (1) and said resting surface, aligned with a first direction (A), parallel to said first horizontal axis (X),
**in that** it comprises a second plurality of supporting elements (11'_{a,b,...,k,...,n}), placed between said base (1) and said resting surface, aligned with a second direction (A'), parallel to said first horizontal axis (X),
**in that** said detection system (2) comprises at least one detection device (21ₖ) placed between at least one first (11ₖ) and one second (11ₖ₊₁) supporting element of said first plurality (11_{a,b,...,k,...,n}), consecutive with each other, and
**in that** said detection system (2) comprises at least one detection device (21ₖ) placed between at least one supporting element (11ₖ) of said first plurality of supporting elements (11_{a,b,...,k,...,n}), and the corresponding supporting element (11'ₖ) of said second plurality of supporting elements (11'_{a,b,...,k,...,n}), facing said at least one support element (11ₖ) of said first plurality of supporting elements (11_{a,b,...,k,...,n}).

4. Machine (M) according to any one of the previous claims, **characterized**
**in that** it comprises a logic control unit (U), wherein at least one interval of inclination values of said base (1) is stored, and connected to said detection system (2);
**in that** said logic control unit (U) is capable of receiving the inclination value of said base (1) detected by said detection system (2) and comparing it with said at least one stored interval of inclination values;
**in that** said logic control unit (U) is capable of emitting a first signal (S), if the inclination value falls within said at least one stored interval of inclination values.

5. Machine (M) according to any one of the previous claims, **characterized**
**in that** it comprises a logic control unit (U), wherein at least one interval of inclination values of said base (1) is stored, and connected to said detection system (2);
**in that** said logic control unit (U) is capable of receiving the inclination value of said base (1) detected by said detection system (2) and comparing it with said at least one stored interval of inclination values; and
**in that** said logic control unit (U) is capable of emitting a second signal (S'), if the inclination value falls out of said at least one stored interval of inclination values.

6. Machine (M) according to any one of claims 4 - 5, **characterized in that** it comprises at least one interface device, connected to said logic control unit (U), capable of receiving said first (S) or second (S') signal from said logic control unit (U) and of emitting, respectively, a first and a second signal of the visual and/or acoustic and/or tactile kind.

7. Machine (M) according to the previous claim, **characterized in that** said interface device is a computer integrated in said machine (M), a portable panel for controlling said machine (M), a tablet, a smartphone or a wearable device.

8. Machine (M) according to claim 7, **characterized in that** said interface device is a light device placed along said base (1).

9. Machine (M) according to any one of claims 2-8, **characterized in that** said plurality of supporting elements (11_{a,b,...,k,...,n}; 11'_{a,b,...,k,...,n}) comprises actuators and/or motors, capable of changing the height of said plurality of supporting elements (11_{a,b,..,k,..,n}; 11'_{a,b,...,k,...,n}) based on said detected inclination value of said base (1).

10. Machine (M) according to any one of claims 2-9, **characterized in that** said detection system (2) comprises analog, digital or MEMS - *Micro-Electro-Mechanical Systems* - inclinometers, detecting the rotation with respect to one or more axes, like capacitive sensors and/or accelerometers and/or gyroscopes and/or digital levels and/or tiltmeters.

11. Operation method of a machine (M) according to claims 1-10, **characterized in that** it comprises the following steps:
*a*. detecting the inclination value of said base (1) between at least two elements (11ₖ, 11ⱼ; 11'ₖ, 11'ⱼ) of said plurality of supporting elements (11_{a,b,...,k,...,n}; 11'_{a,b,...,k,...,n}), with respect to a horizontal plane (XY);
*b*. sending the inclination value of said base (1) detected in said step *a*. to said logic control unit (U);
*c*. comparing the inclination value of said base (1) sent in said step *b*. with said at least one stored interval of inclination values;
*d*. emitting and sending to said interface device a first signal (S), if the inclination value falls within said at least one stored interval of inclination values, or a second signal (S'), if the inclination value falls out of said at least one stored interval of inclination values;
*e*. emitting a first visual, acoustic or tactile signal, corresponding to said first signal (S) received in said step *d*., or emitting a visual, acoustic or tactile signal, corresponding to said second signal (S'), received in said step *d.*

12. Method according to the previous claim, **characterized in that** said step a. is repeated at predetermined periodic intervals.

13. Method according to claim 11, **characterized in that** said step a. is constantly executed during the operation of said machine (M).

## Patentansprüche

1. Maschine (M) zur Bearbeitung von Werkstücken aus Holz, Glas, Glasfaser, Kunststoff, Metall, Keramik, mit einer Basis (1), die sich entlang einer ersten horizontalen Achse (X) entwickelt, um die Maschine (M) auf einer Auflagefläche abzustützen, wobei die Maschine (M) **dadurch gekennzeichnet ist, dass** sie ein Erfassungssystem (2) umfasst, das in der Lage ist, den Wert der Neigung der Basis (1) in Bezug auf eine horizontale Ebene (XY) zu erfassen, die durch die erste horizontale Achse (X) und eine zweite Achse (Y) orthogonal zu der ersten horizontalen Achse (X) definiert ist.

2. Maschine (M) nach dem vorhergehenden Anspruch, **dadurch gekennzeichnet, dass** sie eine Vielzahl von Stützelementen (11_{a,b,...,k,...,n}; 11'_{a,b,...,k,...,n}) umfasst, die zwischen der Basis (1) und der Auflagefläche angeordnet sind; und dass das Erfassungssystem (2) mindestens eine Erfassungsvorrichtung (21ₖ) umfasst, die zwischen mindestens zwei aufeinanderfolgenden Trägerelementen (11_{a,b,...,k,...,n}; 11'_{a,b,...,k,...,n}) angeordnet ist.

3. Maschine (M) nach einem der vorhergehenden Ansprüche, **dadurch gekennzeichnet dass** sie eine erste Vielzahl von Stützelementen (11_{a,b,...,k,...,n}) umfasst, die zwischen der Basis (1) und der Auflagefläche angeordnet und in einer ersten Richtung (A) parallel zur ersten horizontalen Achse (X) ausgerichtet sind, dass es eine zweite Vielzahl von Stützelementen (11'_{a,b,...,k,...,n}) umfasst, die zwischen der Basis (1) und der Auflagefläche angeordnet sind und in einer zweiten Richtung (A') parallel zur ersten horizontalen Achse (X) ausgerichtet sind, dass das Erfassungssystem (2) mindestens eine Erfassungsvorrichtung (21ₖ) umfasst, die zwischen mindestens einem ersten (11ₖ) und einem zweiten (11ₖ₊₁) Stützelement der ersten Vielzahl (11_{a,b,..,k,...,n}) angeordnet ist, die aufeinander folgen, und dass das Erfassungssystem (2) mindestens eine Erfassungsvorrichtung (21ₖ) umfasst, die zwischen mindestens einem Stützelement (11ₖ) der ersten Vielzahl von Stützelementen (11_{a,b,...,k,...,n}) und dem entsprechenden Stützelement (11'ₖ) der zweiten Vielzahl von Stützelementen (11'_{a,b,...,k,...,n}) angeordnet ist und dem mindestens einen Stützelement (11ₖ) der ersten Vielzahl von Stützelementen (11_{a,b,...,k,...,n}) gegenüberliegt.

4. Maschine (M) nach einem der vorhergehenden Ansprüche, **dadurch gekennzeichnet dass** sie eine logische Steuereinheit (U) umfasst, in der mindestens ein Intervall von Neigungswerten der Basis (1) gespeichert ist, und die mit dem Erfassungssystem (2) verbunden ist; dass die logische Steuereinheit (U) in der Lage ist, den von dem Erfassungssystem (2) erfassten Neigungswert der Basis (1) zu empfangen und ihn mit dem mindestens einen gespeicherten Intervall von Neigungswerten zu vergleichen; dass die logische Steuereinheit (U) in der Lage ist, ein erstes Signal (S) auszugeben, wenn der Neigungswert in das mindestens ein gespeichertes Intervall von Neigungswerten fällt.

5. Maschine (M) nach einem der vorhergehenden Ansprüche, **dadurch gekennzeichnet dass** sie eine logische Steuereinheit (U) umfasst, in der mindestens ein Intervall von Neigungswerten der Basis (1) gespeichert ist, und die mit dem Erfassungssystem (2) verbunden ist; dass die logische Steuereinheit (U) in der Lage ist, den von dem Erfassungssystem (2) erfassten Neigungswert der Basis (1) zu empfangen und ihn mit dem mindestens ein gespeichertes Intervall von Neigungswerten zu vergleichen; und dass die logische Steuereinheit (U) in der Lage ist, ein zweites Signal (S') auszugeben, wenn der Neigungswert aus dem mindestens ein gespeichertes Intervall von Neigungswerten herausfällt.

6. Maschine (M) nach einem der Ansprüche 4 - 5, **dadurch gekennzeichnet, dass** sie mindestens eine Schnittstellenvorrichtung umfasst, die mit der logischen Steuereinheit (U) verbunden ist und in der Lage ist, das erste (S) oder zweite (S') Signal von der logischen Steuereinheit (U) zu empfangen und jeweils ein erstes und ein zweites Signal visueller und/oder akustischer und/oder taktiler Art auszugeben.

7. Maschine (M) nach dem vorhergehenden Anspruch, **dadurch gekennzeichnet, dass** die Schnittstellenvorrichtung ein in die Maschine (M) integrierter Computer, ein tragbares Panel zur Steuerung der Maschine (M), ein Tablet, ein Smartphone oder ein tragbares Gerät ist.

8. Maschine (M) nach Anspruch 7, **dadurch gekennzeichnet, dass** die Schnittstellenvorrichtung eine leichte Vorrichtung ist, die entlang der Basis (1) angeordnet ist.

9. Maschine (M) nach einem der Ansprüche 2-8, **dadurch gekennzeichnet, dass** die Vielzahl von Stützelementen (11_{a,b,...,k,...,n}; 11'_{a,b,...,k,...,n}) Aktuatoren und/oder Motoren umfasst, die in der Lage sind, die Höhe der Vielzahl von Stützelementen (11_{a,b,...,k,...,n}; 11'_{a,b,...,k,...,n}) auf der Grundlage des erfassten Neigungswertes der Basis (1) zu ändern.

10. Maschine (M) nach einem der Ansprüche 2-9, **dadurch gekennzeichnet, dass** das Erfassungssystem (2) analoge, digitale oder MEMS - *Mikro-Elektro-Mechanische Systeme -* Neigungsmesser umfasst, die die Drehung in Bezug auf eine oder mehrere Achsen erfassen, wie kapazitive Sensoren und/oder Beschleunigungsmesser und/oder Gyroskope und/oder digitale Pegel und/oder Neigungsmesser.

11. Verfahren zum Betrieb einer Maschine (M) nach einem der Ansprüche 1 - 10, **dadurch gekennzeichnet, dass** es die folgenden Schritte umfasst:
a. erfassen des Neigungswerts der Basis (1) zwischen mindestens zwei Elementen (11ₖ, 11ⱼ; 11'ₖ, 11'ⱼ) der Vielzahl von Stützelementen (11_{a,b,...,k,...,n}; 11'_{a,b,...,k,...,n}) in Bezug auf eine horizontale Ebene (XY);
*b*. Senden des Neigungswertes der Basis (1), der in dem Schritt a. an die logische Steuereinheit (U);
c. Vergleichen des in Schritt *b*. gesendeten Neigungswerts der Basis (1) mit dem mindestens ein gespeichertes Intervall von Neigungswerten;
d. Ausgeben und Senden eines ersten Signals (S) an die Schnittstellenvorrichtung, wenn der Neigungswert in das mindestens eine gespeicherte Intervall von Neigungswerten fällt, oder eines zweiten Signals (S'), wenn der Neigungswert außerhalb des mindestens einen gespeicherten Intervalls von Neigungswerten liegt;
e. Aussenden eines ersten optischen, akustischen oder taktilen Signals, das dem in Schritt d. empfangenen ersten Signal (S) entspricht, oder Aussenden eines optischen, akustischen oder taktilen Signals, das dem in Schritt d. empfangenen zweiten Signal (S') entspricht.

12. Verfahren nach dem vorhergehenden Anspruch, **dadurch gekennzeichnet, dass** der Schritt a. in vorgegebenen periodischen Abständen wiederholt wird.

13. Verfahren nach Anspruch 11, **dadurch gekennzeichnet, dass** der Schritt a. während des Betriebs der Maschine (M) ständig ausgeführt wird.

## Revendications

1. Machine (M) pour le traitement de pièces en bois, verre, fibre de verre, plastique, métal, céramique comprenant une base (1), qui se développe le long d'un premier axe horizontal (X), pour reposer ladite machine (M) sur une surface d'appui, ladite machine (M) étant **caractérisée en ce qu'**elle comprend un système de détection (2), capable de détecter la valeur de l'inclinaison de ladite base (1), par rapport à un plan horizontal (XY), défini par ledit premier axe horizontal (X) et un deuxième axe (Y) orthogonal audit premier axe horizontal (X).

2. Machine (M) selon la revendication précédente, **caractérisée en ce qu'**elle comprend une pluralité d'éléments de support (11_{a,b,...,k,...,n}; 11'_{a,b,...,k,...,n}) placé entre ladite base (1) et ladite surface d'appui; et **en ce que** ledit système de détection (2) comprend au moins un dispositif de détection (21ₖ) placé entre au moins deux éléments de support (11_{a,b,...,k,...,n}; 11'_{a,b,...,k,...,n}) consécutifs les uns aux autres.

3. Machine (M) selon l'une quelconque des revendications précédentes, **caractérisée en ce qu'**elle comprend une première pluralité d'éléments de support (11_{a,b,...,k,...,n}) placés entre ladite base (1) et ladite surface d'appui, alignés selon une première direction (A), parallèle audit premier axe horizontal (X), **en ce qu'**elle comprend une deuxième pluralité d'éléments de support (11'_{a,b,...,k,...,n}), placés entre ladite base (1) et ladite surface d'appui, alignés avec une deuxième direction (A'), parallèle audit premier axe horizontal (X), **en ce que** ledit système de détection (2) comprend au moins un dispositif de détection (21ₖ) placé entre au moins un premier (11ₖ) et un deuxième (11ₖ₊₁) éléments de support de ladite première pluralité (11'_{a,b,...,k,...,n}), consécutifs les uns aux autres, et **en ce que** ledit système de détection (2) comprend au moins un dispositif de détection (21ₖ) placé entre au moins un élément de support (11ₖ) de ladite première pluralité d'éléments de support (11_{a,b,...,k,...,n}), et l'élément de support correspondant (11'ₖ) de ladite deuxième pluralité d'éléments de support (11'_{a,b,...,k,...,n}), faisant face audit au moins un élément de support (11ₖ) de ladite première pluralité d'éléments de support (11_{a,b,..,k,..,n}).

4. Machine (M) selon l'une quelconque des revendications précédentes, **caractérisée en ce qu'**elle comprend une unité logique de commande (U), dans laquelle au moins un intervalle de valeurs d'inclinaison de ladite base (1) est stocké, et connecté audit système de détection (2); **en ce que** ladite unité de commande logique (U) est capable de recevoir la valeur d'inclinaison de ladite base (1) détectée par ledit système de détection (2) et de la comparer avec ledit au moins un intervalle stocké de valeurs d'inclinaison; **en ce que** ladite unité de commande logique (U) est capable d'émettre un premier signal (S), si la valeur d'inclinaison se situe dans ledit au moins un intervalle stocké de valeurs d'inclinaison.

5. Machine (M) selon l'une quelconque des revendications précédentes, **caractérisée en ce qu'**elle comprend une unité logique de commande (U), dans laquelle au moins un intervalle de valeurs d'inclinaison de ladite base (1) est stocké, et connecté audit système de détection (2); **en ce que** ladite unité de commande logique (U) est capable de recevoir la valeur d'inclinaison de ladite base (1) détectée par ledit système de détection (2) et de la comparer avec ledit au moins un intervalle stocké de valeurs d'inclinaison; et **en ce que** ladite unité de commande logique (U) est capable d'émettre un deuxième signal (S'), si la valeur d'inclinaison tombe en dehors dudit au moins un intervalle stocké de valeurs d'inclinaison.

6. Machine (M) selon l'une quelconque des revendications 4 - 5, **caractérisée en ce qu'**elle comprend au moins un dispositif d'interface, connecté à ladite unité logique de contrôle (U), apte à recevoir ledit premier (S) ou deuxième (S') signal provenant de ladite unité logique de commande (U) et d'émettre, respectivement, un premier et un deuxième signal de nature visuelle et/ou acoustique et/ou tactile.

7. Machine (M) selon la revendication précédente, **caractérisée en ce que** ledit dispositif d'interface est un ordinateur intégré à ladite machine (M), un panneau portable pour contrôler ladite machine (M), une tablette, un smartphone ou un appareil portable.

8. Machine (M) selon la revendication 7, **caractérisée en ce que** ledit dispositif d'interface est un dispositif lumineux placé le long de ladite base (1).

9. Machine (M) selon l'une quelconque des revendications 2-8, **caractérisée en ce que** ladite pluralité d'éléments de support (11_{a,b,...,k,...,n}; 11'_{a,b,...,k,...,n}) comprend des actionneurs et/ou des moteurs capables de modifier la hauteur de ladite pluralité d'éléments de support (11_{a,b,...,k,...,n}; 11'_{a,b,...,k,...,n}) sur la base de ladite valeur d'inclinaison détectée de ladite base (1).

10. Machine (M) selon l'une quelconque des revendications 2-9, **caractérisée en ce que** ledit système de détection (2) comprend des inclinomètres analogiques, numériques ou MEMS - *Système Micro-Electro-Mécanique,* détectant la rotation par rapport à un ou plusieurs axes, comme des capteurs capacitifs et/ou des accéléromètres et/ou des gyroscopes et/ou des niveaux numériques et/ou des inclinomètres.

11. Procédé de fonctionnement d'une machine (M) selon les revendications 1 - 10, **caractérisé en ce qu'**il comprend les étapes suivantes:
a. détecter la valeur d'inclinaison de ladite base (1) entre au moins deux éléments (11ₖ, 11ⱼ; 11'ₖ, 11'ⱼ) de ladite pluralité d'éléments de support (11_{a,b,...,k,...,n}; 11'_{a,b,...,k,...,n}), par rapport à un plan horizontal (XY);
*b*. envoyer la valeur d'inclinaison de ladite base (1) détectée lors de ladite étape *a*. à ladite unité de commande logique (U);
*c*. comparer la valeur d'inclinaison de ladite base (1) envoyée lors de ladite étape *b*. avec ledit au moins un intervalle stocké de valeurs d'inclinaison;
*d*. émettre et envoyer audit dispositif d'interface un premier signal (S), si la valeur d'inclinaison tombe dans ledit au moins un intervalle stocké de valeurs d'inclinaison, ou un deuxième signal (S'), si la valeur d'inclinaison tombe en dehors dudit au moins un intervalle stocké de valeurs d'inclinaison;
e. émettre un premier signal visuel, acoustique ou tactile, correspondant audit premier signal (S) reçu lors de ladite étape d., ou émettre un signal visuel, acoustique ou tactile, correspondant audit deuxième signal (S'), reçu lors de ladite étape d.

12. Procédé selon la revendication précédente, **caractérisé en ce que** ladite étape a. est répété à intervalles périodiques prédéterminés.

13. Procédé selon la revendication 11, **caractérisé en ce que** ladite étape a. est exécuté en permanence pendant le fonctionnement de ladite machine (M).
